# DEMANDE DE BREVET EUROPEEN

(11) **EP 1 588 939 A1**
(43) Date de publication de la demande: **26.10.2005**
(21) Numéro de dépôt: 05290710.2
(22) Date de dépôt: 31.03.2005
(51) Int. Cl.: B64C 25/60, F16F 9/06

(54) **Atterrisseur à amortisseur trichambre**

(30) Priorité: 19.04.2004 FR 0404092
(71) Demandeur: MESSIER-DOWTY S.A., 78140 Velizy Villacoublay (FR)
(72) Inventeur: Martinez, Laurent, 92120 Montrouge (FR); Gillet, Marc, 92130 Issy-les-Moulineaux (FR); Gautrain, Sébastien, 78350 Jouy-en-Josas (FR); Courtois, Maud, 75005 Paris (FR)
(74) Mandataire: Parzy, Benjamin Alain

(57) **Abrégé**

L'invention concerne un atterrisseur comportant un amortisseur avec un premier élément (1) et un second élément (2) coulissant relativement l'un à l'autre, lesdits éléments coulissants (1,2) définissant un volume interne qui est partiellement rempli de fluide hydraulique de façon à réserver dans les extrémités des éléments coulissants respectivement une première chambre (18) et une deuxième chambre (19) remplies de gaz sous pression. L'amortisseur comporte une troisième chambre (20) remplie de gaz disposée en série avec la première chambre (18) et séparée de celle-ci par un piston séparateur (15) monté pour coulisser à étanchéité dans l'élément coulissant (2) correspondant entre une butée de fin de course (17) et l'extrémité dudit élément coulissant (2).

## Description

L'invention concerne un atterrisseur à amortisseur trichambre.

### ARRIERE-PLAN DE L'INVENTION

On connaît des atterrisseurs comportant un amortisseur avec un premier élément et un second élément coulissant relativement l'un à l'autre, lesdits éléments coulissants définissant un volume interne qui est partiellement rempli de fluide hydraulique de façon à réserver dans les extrémités des éléments coulissants respectivement une première chambre et une deuxième chambre remplies de gaz sous pression.

En général, l'amortisseur comporte un diaphragme solidaire de l'un des éléments et présentant des orifices de laminage par lesquels le fluide hydraulique est forcé lors de l'enfoncement de l'amortisseur. Ce laminage provoque une dissipation d'une partie de l'énergie cinétique de l'aéronef ayant conduit à l'enfoncement de l'amortisseur.

Une autre partie de l'énergie cinétique est absorbée par la compression du gaz contenu dans les chambres, du fait de la diminution de volume desdites chambres lors de l'enfoncement.

Dans le cas des atterrisseurs situés sous le fuselage de l'aéronef, il est important de s'assurer que ceux-ci ne peuvent rompre leurs attaches risquant alors de blesser des passagers ou d'endommager des réservoirs de carburant.

A cet effet, il est connu de limiter l'effort dans l'amortisseur en prévoyant des parties structurales susceptibles de flamber lorsque l'effort dans l'amortisseur dépasse un seuil prédéterminé. Mais ces systèmes sont délicats à concevoir et imposent un remplacement des parties structurales flambées avant tout redécollage de l'aéronef, ce qui perturbe la régularité de la ligne assurée par l'aéronef et se révèle problématique lorsque l'aéronef se trouve sur un aéroport éloigné et isolé.

### OBJET DE L'INVENTION

L'invention a pour objet un atterrisseur muni d'une sécurité permettant de limiter l'effort dans l'amortisseur, et ne nécessitant pas une intervention immédiate de maintenance après déclenchement de la sécurité.

### BREVE DESCRIPTION DE L'INVENTION

On propose un atterrisseur comportant un amortisseur avec un premier élément et un second élément coulissant relativement l'un à l'autre, lesdits éléments coulissants définissant un volume interne qui est partiellement rempli de fluide hydraulique de façon à réserver dans les extrémités des éléments coulissants respectivement une première chambre et une deuxième chambre remplies de gaz sous pression. Selon l'invention, l'amortisseur comporte une troisième chambre remplie de gaz disposée en série avec la première chambre et séparée de celle-ci par un piston séparateur monté pour coulisser à étanchéité dans l'élément coulissant correspondant entre une butée de fin de course et l'extrémité dudit élément coulissant.

Ainsi, lorsque la pression dans la première chambre atteint, du fait de l'enfoncement de l'amortisseur, une pression égale à la pression de gonflage de la troisième chambre, le piston séparateur se met à bouger de telle sorte que les pressions dans les deux chambres restent égales (à des effets d'inertie et de frottement du piston près).

Les première et troisième chambres se comportent alors comme si elles ne formaient qu'une seule chambre. La première chambre voit ainsi son volume augmenter du volume de la troisième chambre, ce qui tend à diminuer la pente de la courbe d'effort générée par l'amortisseur, et, partant, à diminuer l'effort maximal que peut générer l'amortisseur.

Ainsi, la troisième chambre représente une sécurité de mise en oeuvre très simple. En outre, le piston séparateur revient de lui-même en butée lorsque la pression dans la première chambre descend sous la pression de gonflage de la troisième chambre. La sécurité de l'invention se réinitialise donc de façon automatique, sans nécessiter d'intervention de maintenance. L'exploitation de l'aéronef n'est donc pas interrompue, et celui-ci peut continuer à assurer un service commercial.

De préférence, le piston séparateur est monté pour coulisser à étanchéité sur une colonne centrale ayant une extrémité libre qui porte la butée de fin de course.

Selon un aspect particulier de l'invention, la colonne centrale comporte un conduit central débouchant dans la première chambre. De préférence alors, la première chambre contient une quantité de fluide hydraulique juste suffisante pour affleurer une entrée du conduit central.

Selon un autre aspect particulier de l'invention, la colonne centrale comporte un conduit auxiliaire débouchant dans la troisième chambre. De préférence alors, la troisième chambre contient une quantité de fluide hydraulique juste suffisante pour affleurer une entrée du conduit auxiliaire.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'un atterrisseur selon l'invention ;
- la figure 2 est une vue agrandie de la figure 1, au niveau de la bonbonne.

### DESCRIPTION DETAILLEE DE L'INVENTION

L'invention est ici appliquée à un atterrisseur de type direct avec amortisseur intégré, monté sous le fuselage d'un aéronef. Il est évident que l'invention n'est pas limitée à ce type d'atterrisseur, mais est également applicable à des atterrisseurs à amortisseur externe, pas nécessairement montés sous le fuselage.

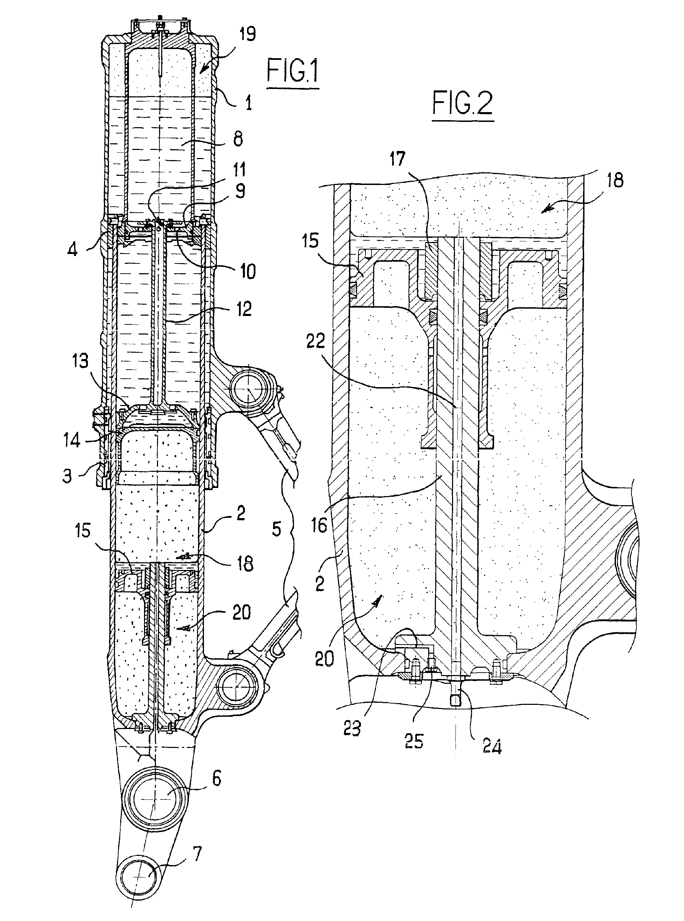

En référence à la figure 1, et de façon connue en soi, l'atterrisseur comporte un caisson 1 relié à l'aéronef, dans lequel une tige 2 est montée pour coulisser à étanchéité. A cet effet, le caisson porte en partie basse un palier inférieur 3 ayant une surface interne en contact avec la tige 2, et la tige 2 porte en partie haute un palier supérieur 4 ayant une surface externe en contact avec le caisson 1.

Un compas 5 (dont on voit le début des deux branches) est monté entre le caisson 1 et la tige 2 pour empêcher toute rotation de la tige 2 autour de son axe par rapport au caisson 1.

A son extrémité inférieure, la tige 2 forme une fourche dont les branches comportent des alésages 6 destinés à recevoir l'axe d'articulation d'un balancier portant plusieurs roues (non représenté). Les branches de la fourche s'étendent ici au-delà des alésages 6 pour présenter des alésages 7 destinés à recevoir l'extrémité de barres de freinage (non représentées) arrêtant angulairement les couronnes de freinage qui équipent les roues portées par le balancier.

Un tube ajouré 8 fixé en haut du caisson 1 s'étend dans celui-ci et porte à son extrémité inférieure un diaphragme 9 ayant une surface externe qui coulisse à étanchéité sur la surface interne de la tige 2.

Le diaphragme 9 comporte des orifices de laminage 10, et un orifice central 11 dans lequel s'étend une aiguille de laminage 12 solidaire de la tige 2 par l'intermédiaire d'un support 13 rapporté dans la tige 2 au moyen d'un jonc et comportant des orifices de passage.

Un premier piston séparateur 14 est monté dans la tige 2 pour coulisser à étanchéité, le support 13 formant une butée de fin de course pour ledit piston séparateur 14.

Un deuxième piston séparateur 15 est disposé dans la tige 2 pour coulisser à étanchéité. Comme cela est mieux visible à la figure 2, le deuxième piston séparateur 15 coulisse sur une colonne 16 fixée à l'extrémité de la tige 2. La colonne 16 comporte à son extrémité supérieure une butée de fin de course 17 pour le deuxième piston séparateur 15.

Lorsque l'atterrisseur est détendu, comme illustré, du fluide hydraulique (symbolisé par des traits horizontaux) remplit entièrement le volume s'étendant entre le piston séparateur 14 et le diaphragme 9, ainsi que le volume annulaire s'étendant entre la paroi externe de la tige 2 et la paroi interne du caisson 1 entre les deux paliers 3,4. Le fluide hydraulique remplit partiellement le volume s'étendant au-dessus du diaphragme 9.

Le reste du volume interne de l'atterrisseur définit une première chambre 18 qui s'étend entre le premier piston séparateur 14 et le second piston séparateur 15, et une deuxième chambre 19 formée par la partie du volume au dessus du diaphragme 9 non remplie de fluide hydraulique, et une troisième chambre 20 agencée sous le second piston séparateur 15. La troisième chambre 20 est ainsi disposée en série avec la première chambre 18.

La première chambre 18 est remplie d'azote (symbolisé par des points) à une pression de l'ordre 120 bars, tandis que la deuxième chambre 19 est remplie d'azote à une pression de l'ordre de 20 bars. Pour ce qui est de la troisième chambre 20, elle est gonflée à une pression de 180 bars, donc supérieure à la pression de gonflage de la première chambre 18 adjacente.

Lorsque l'atterrisseur est détendu, le premier piston séparateur 14 est alors en butée contre le support 13, tandis que le deuxième piston séparateur 15 est en appui contre la butée 17.

Le fonctionnement de l'amortisseur est le suivant.

Lors d'un atterrissage, la tige 2 est forcée à s'enfoncer dans le caisson 1. Ce faisant, le fluide hydraulique est forcé à passer au travers des orifices de laminage du diaphragme 9. Ce laminage provoque une dissipation d'énergie par frottement interne dans le fluide hydraulique. La quantité de fluide hydraulique passant au travers du diaphragme 9 diminue d'autant le volume de la seconde chambre 19, ce qui provoque la compression de l'azote qui y est contenu et en augmente sa pression.

Il est à noter que le fluide se trouvant au-dessus du diaphragme 9 voit sa pression imposée par la pression régnant dans la seconde chambre 19. Pour ce qui est du fluide se trouvant au dessous du diaphragme 9, sa pression est imposée par la résistance opposée au passage du fluide hydraulique au travers des orifices de laminage du diaphragme 9. Quand cette pression atteint la pression de gonflage de la première chambre 18, le premier piston séparateur 14 se déplace alors, provoquant la compression du gaz de la première chambre 15.

L'azote contenu dans les chambres 18,19 se comporte ainsi comme un ressort dont l'effort suit une loi sensiblement polytropique.

Ensuite, la tige 2 trouve une position d'équilibre stable dans le caisson 1 sous l'effet de la partie du poids de l'aéronef à laquelle l'atterrisseur est soumis. Dans la position d'équilibre, le fluide hydraulique et l'azote contenu dans les deux chambres 18,19 sont à la même pression.

Dans certaines circonstances, par exemple en cas de mauvais chargement de l'aéronef, ou encore en cas de défaillance des atterrisseurs de voilure lors d'un atterrissage, l'atterrisseur central peut avoir à supporter une partie importante du poids de l'aéronef, dépassant en particulier les limites pour lesquelles il a été conçu.

Pour éviter que l'effort exercé sur l'atterrisseur ne dépasse un niveau dangereux, le deuxième piston séparateur 15 est apte à se déplacer lorsque la pression dans la première chambre 18 atteint la pression de gonflage de la troisième chambre 20.

Dès lors, tout se passe comme si le volume de la première chambre 18 se trouvait instantanément augmenté du volume de la troisième chambre 20, ce qui diminue la pente de la courbe d'effort généré par l'amortisseur, et, partant, diminue l'effort maximal que peut développer l'atterrisseur.

La troisième chambre 20 constitue un moyen simple de sécurité, permettant de limiter les efforts maximaux développés par l'atterrisseur.

Dès que la pression dans la première chambre 18 redescend en dessous de la pression de gonflage de la troisième chambre 20, le deuxième piston séparateur 15 revient de lui-même contre la butée 17. La sécurité du dispositif de l'invention se réinitialise donc automatiquement, de sorte qu'aucune maintenance n'est nécessaire et que l'aéronef continue à pouvoir être utilisé normalement, même après déclenchement de la sécurité.

Le déplacement du deuxième piston séparateur 15 provoque une montée de la pression dans la troisième chambre 20, de sorte que ledit déplacement est facilement détectable au moyen d'un simple capteur de pression apte à détecter le dépassement d'un seuil de pression dans la troisième chambre 20.

Selon un aspect particulier de l'invention, la colonne 16 comporte un conduit central 22 qui débouche dans la première chambre 18, ce qui permet d'assurer facilement le gonflage de ladite première chambre depuis l'extérieur de l'atterrisseur, au moyen d'une valve de gonflage 24.

Une autre valve de gonflage non représentée est disposée directement sur la tige 2 pour permettre le gonflage de la troisième chambre 20.

Selon un autre aspect particulier de l'invention, la seconde chambre 18 contient une petite quantité de fluide hydraulique, juste suffisante pour affleurer l'extrémité supérieure de la colonne 16, et donc l'entrée du conduit central 22. Les joints d'étanchéité équipant le deuxième piston séparateur 15 restent ainsi mouillés par ce fluide hydraulique, ce qui évite leur dessèchement. En outre, en cas de défaillance du joint d'étanchéité du premier piston séparateur 14, les fuites de fluide hydraulique consécutives à cette défaillance s'écoulent dans la première chambre 18. La totalité de ces fuites se déverse alors dans le conduit central 22 de la colonne 16 en raison de l'affleurement de l'extrémité supérieure de la colonne 16 par le fluide hydraulique déjà présent dans la première chambre 18.

Ainsi, grâce au conduit central 22, une maintenance effectuée sur la première chambre 18 permet de détecter une défaillance du joint d'étanchéité du premier piston séparateur 14.

De la même façon, la troisième chambre 20 contient une petite quantité de fluide hydraulique, juste suffisante pour affleurer l'entrée d'un conduit auxiliaire 23 ménagé dans la base de la colonne 16 et fermé par une vis de purge 25. La présence de fluide hydraulique dans le conduit auxiliaire 23, détectée lors d'une opération de maintenance, est le signe d'une défaillance d'un des joints d'étanchéité du deuxième piston séparateur 15.

L'invention n'est pas limitée aux modalités particulières de l'invention qui viennent d'être décrites, mais bien au contraire englobe toute variante entrant dans le cadre de l'invention tel que défini par les revendications.

## Revendications

1. Atterrisseur comportant un amortisseur avec un premier élément (1) et un second élément (2) coulissant relativement l'un à l'autre, lesdits éléments coulissants (1,2) définissant un volume interne qui est partiellement rempli de fluide hydraulique de façon à réserver dans les extrémités des éléments coulissants respectivement une première chambre (18) et une deuxième chambre (19) remplies de gaz sous pression, **caractérisé en ce que** l'amortisseur comporte une troisième chambre (20) remplie de gaz disposée en série avec la première chambre (18) et séparée de celle-ci par un piston séparateur (15) monté pour coulisser à étanchéité dans l'élément coulissant (2) correspondant entre une butée de fin de course (17) et l'extrémité dudit élément coulissant (2).

2. Atterrisseur selon la revendication 1, **caractérisé en ce que** le piston séparateur (15) est monté pour coulisser à étanchéité sur une colonne centrale (16) ayant une extrémité libre qui porte la butée de fin de course (17).

3. Atterrisseur selon la revendication 2, **caractérisé en ce que** la colonne centrale (16) comporte un conduit central (22) débouchant dans la première chambre (18).

4. Atterrisseur selon la revendication 3, **caractérisé en ce que** la première chambre (18) contient une quantité de fluide hydraulique juste suffisante pour affleurer une entrée du conduit central (22).

5. Atterrisseur selon la revendication 2, **caractérisé en ce que** la colonne centrale (16) comporte un conduit auxiliaire (23) débouchant dans la troisième chambre (20).

6. Atterrisseur selon la revendication 5, **caractérisé en ce que** la troisième chambre (20) contient une quantité de fluide hydraulique juste suffisante pour affleurer une entrée du conduit auxiliaire (23).
